(19) Europäisches Patentamt
European Patent Office
Office européen des brevets

(11) EP 1 882 723 B1

# (12) EUROPÄISCHE PATENTSCHRIFT

(45) Veröffentlichungstag und Bekanntmachung des Hinweises auf die Patenterteilung:
**25.03.2009 Patentblatt 2009/13**

(51) Int Cl.:
***C09D 11/00*** *(2006.01)* ***C09B 43/16*** *(2006.01)*
***C09B 67/22*** *(2006.01)*

(21) Anmeldenummer: **06118014.7**

(22) Anmeldetag: **27.07.2006**

## (54) Bisazofarbstoffe, ihre Herstellung und Verwendung

Bisazo dyes, their preparation and their use

Colorants bisazoiques, leur préparation et leur utilisation

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**30.01.2008 Patentblatt 2008/05**

(73) Patentinhaber: **ILFORD Imaging Switzerland GmbH**
**1723 Marly 1 (CH)**

(72) Erfinder:
- **Jan, Gérald**
  **1752, Villars-sur-Glâne (CH)**
- **Baettig, Kurt**
  **1724 Le Mouret (CH)**

(56) Entgegenhaltungen:

| | |
|---|---|
| **EP-A- 0 896 032** | **EP-A1- 0 692 523** |
| **WO-A-01/66651** | **WO-A-98/12264** |
| **WO-A-20/06103414** | **DE-A1- 3 337 799** |
| **DE-A1- 3 520 287** | **DE-A1- 19 735 769** |
| **GB-A- 2 159 829** | |

Bemerkungen:
Die Akte enthält technische Angaben, die nach dem Eingang der Anmeldung eingereicht wurden und die nicht in dieser Patentschrift enthalten sind.

EP 1 882 723 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

### Technisches Gebiet

Die Erfindung bezieht sich auf neue gelbe Bisazofarbstoffe, ihre Salze, ein Verfahren zu ihrer Herstellung, ihren Einsatz in Färbe- und Druckverfahren sowie auf Farbstoffpräparationen, die diese Farbstoffe enthalten, insbesondere wässrige Aufzeichnungsflüssigkeiten für den Tintenstrahldruck.

### Stand der Technik

Im Tintenstrahldruck sind im wesentlichen zwei Verfahren zu unterscheiden: Beim kontinuierlichen Tintenstrahldruck wird unter Druck aus einer Düse ein Strahl einer Aufzeichnungsflüssigkeit ausgestossen, der in einem gewissen Abstand von der Düse in einzelne Tröpfchen zerfällt. Die einzelnen Tröpfchen werden, je nachdem ob eine Bildstelle bedruckt werden soll oder nicht, in einen Auffangbehälter abgelenkt oder auf das Aufzeichnungsmaterial aufgebracht. Dies geschieht beispielsweise dadurch, dass auf Grund vorgegebener digitaler Daten nicht benötigte Tröpfchen elektrisch aufgeladen und anschliessend in einem statischen elektrischen Feld in den Auffangbehälter abgelenkt werden. Auch das umgekehrte Verfahren ist möglich, in dem ungeladene Tröpfchen im Behälter aufgefangen werden. Beim nichtkontinuierlichen Verfahren, dem sogenannten "Drop on demand", werden die Tröpfchen der Aufzeichnungsflüssigkeit nur dann erzeugt, wenn auf Grund der digitalen Daten ein Bildpunkt dargestellt werden muss.

Heutige Tintenstrahldrucker müssen aus wirtschaftlichen Gründen immer schneller drucken können. Sie erlauben auch photoähnliche Ausdrucke digitaler Bilder, die mit Digitalkameras aufgenommen wurden oder die durch Digitalisierung von Aufnahmen auf Silberhalogenidaufnahmefilmen mit Hilfe eines Scanners erzeugt wurden. Solche Ausdrucke lassen sich von herkömmlichen Kopien auf Silberhalogenidmaterialien kaum mehr unterscheiden. Diese mit Hilfe des Tintenstrahldrucks hergestellten Bilder müssen eine sehr gute Haltbarkeit auch unter ungünstigen Bedingungen aufweisen. Das ist nur mit einem fein abgestimmten System von Aufzeichnungsflüssigkeiten (respektive den darin enthaltenen Farbstoffen) und einem geeigneten Aufzeichnungsmaterial möglich.

Für solche Drucker geeignete Aufzeichnungsmaterialien müssen die Aufzeichnungsflüssigkeiten besonders rasch aufnehmen können, insbesondere bei der Herstellung von photoähnlichen Bildern. Für diesen Zweck besonders geeignet sind Aufzeichnungsmaterialien, die nanoporöse anorganische Verbindungen, vorzugsweise Oxide, insbesondere Aluminiumoxide oder Siliziumdioxid, oder Oxid/hydroxide, insbesondere Aluminiumoxid/hydroxide, enthalten. Solche Materialien sind als "nanoporöse" Aufzeichnungsmaterialien bekannt.

Nanoporöse Aufzeichnungsmaterialien nehmen die Aufzeichnungsflüssigkeiten äusserst rasch (im Mikrosekundenbereich) durch die Kapillarkräfte der nanoporösen Verbindungen auf, während Aufzeichnungsmaterialien auf Polymerbasis die Aufzeichnungsflüssigkeiten langsamer (im Millisekundenbereich) durch die Quellung des Polymers aufnehmen.

Mit Hilfe des Tintenstrahldrucks hergestellte Bilder müssen eine gute Haltbarkeit auch unter ungünstigen Bedingungen aufweisen.

Die meisten heute erhältlichen Aufzeichnungsflüssigkeiten erfüllen zusammen mit nanoporösen Aufzeichnungsmaterialien nicht alle an sie gestellten Anforderungen.

Die heute verwendeten Gelbfarbstoffe haben nicht alle notwendigen Eigenschaften, wie eine sehr hohe Brillanz (Sättigung), einen geeigneten Farbton, eine gute Lichtechtheit, eine gute Ozonbeständigkeit, eine ausgezeichnete Diffusionsfestigkeit, keine Ablagerungen auf der Oberfläche des Aufzeichnungsmaterials ("Bronzing") sowie eine ausgezeichnete Löslichkeit in den hauptsächlich wässrigen Aufzeichnungsflüssigkeiten.

Obwohl schon eine ganze Anzahl verschiedener Gelbfarbstoffe zur Verwendung im Tintenstrahldruck vorgeschlagen worden sind, vermag noch keiner alle vorhin genannten Anforderungen zu erfüllen.

Der Gelbfarbstoff der Formel (I) wird in den Patenten US 6'277'185 (Beispiel 2) und CH 606'321 (Beispiel 3) beschrieben.

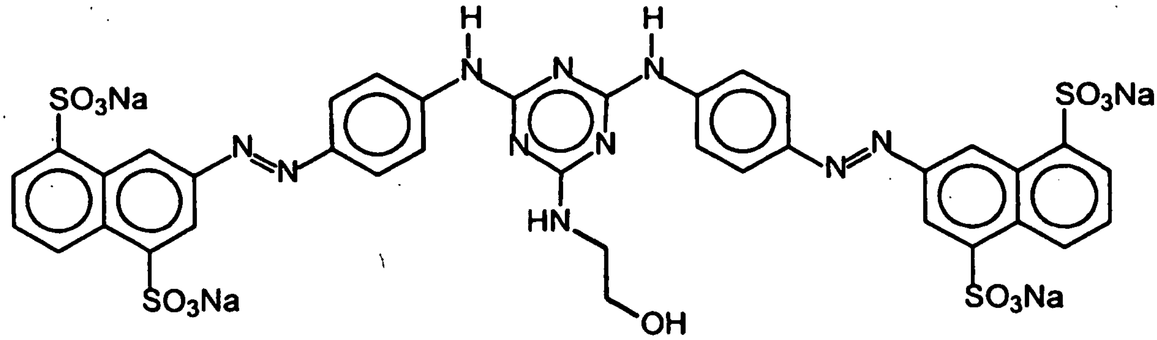

(I)

Der Gelbfarbstoff "Direktgelb 86" der Formel (II) ist kommerziell erhältlich.

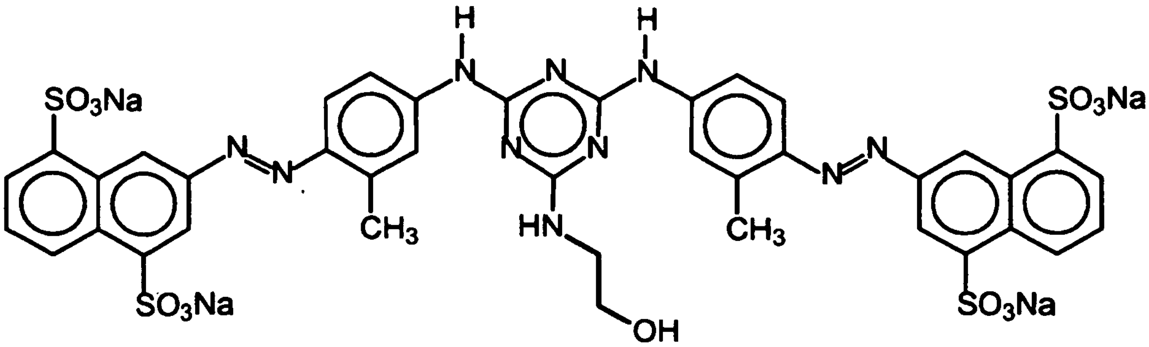

(II)

Der Gelbfarbstoff "Direktgelb 132" der Formel (III) ist ebenfalls kommerziell erhältlich.

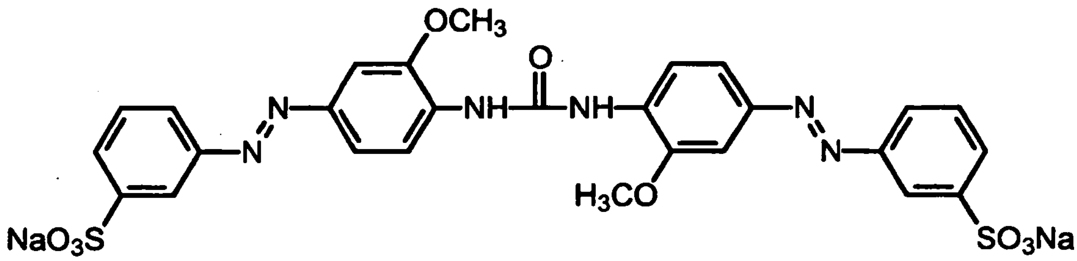

(III)

Der Gelbfarbstoff der Formel (IV) wird in der Patentanmeldung WO 01/66'651 (Beispiel 5) beschrieben.

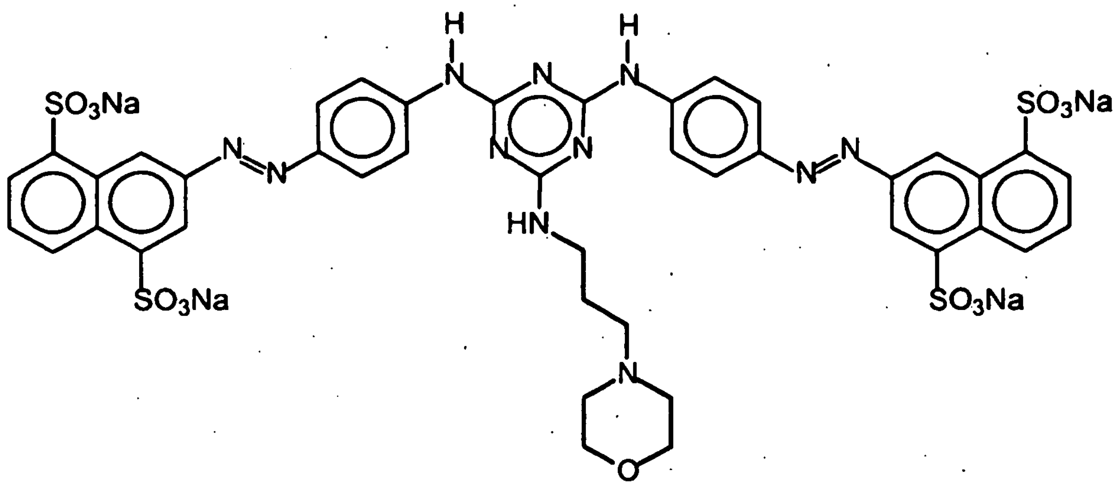

(IV)

Gelbfarbstoffe der allgemeinen Formel (XIII) sowie ihre Verwendung für die Anfärbung von Cellulosefasern werden in der Patentanmeldung DE 3'337'799 beschrieben.

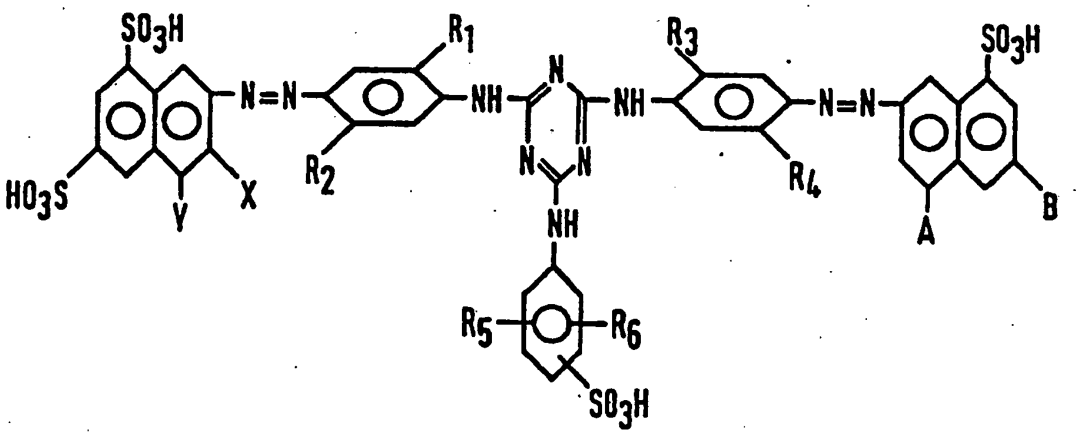

(XIII)

Der Nicht-Chromophor-Substituent am Triazinring ist ein mit einer Sulfogruppe substituierter Phenylrest.

Der reaktive Gelbfarbstoff der Formel (XIV) und ein sehr ähnlicher Farbstoff sowie ihre Verwendung für die Anfärbung von Baumwolle und Cellulosefasern werden in den Patentanmeldungen DE 3'520'287 und GB 2'159'829 beschrieben.

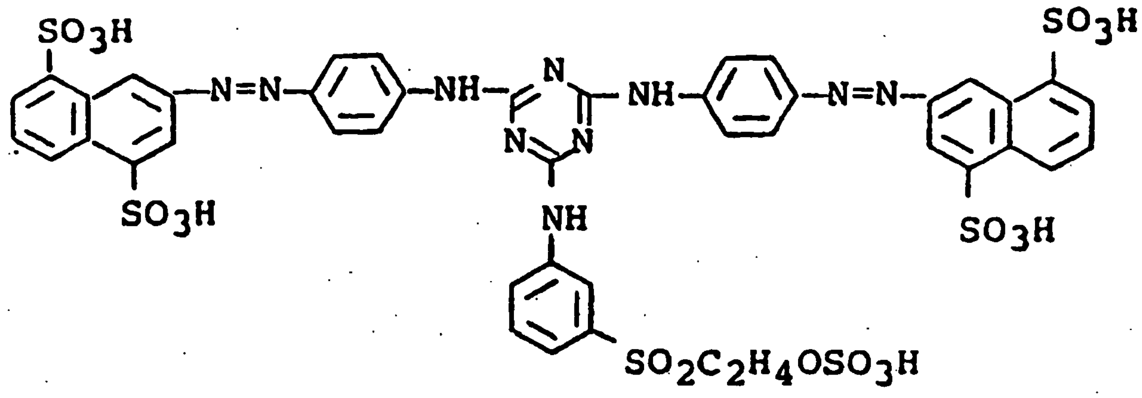

(XIV)

Gelbfarbstoffe mit guter Lichtechtheit und guter Ozonbeständigkeit der allgemeinen Formel (XV) sowie ihre Verwendung in Aufzeichnungsflüssigkeiten für den Tintenstrahldruck werden in der Patentanmeldung WO 2006/103'414 beschrieben.

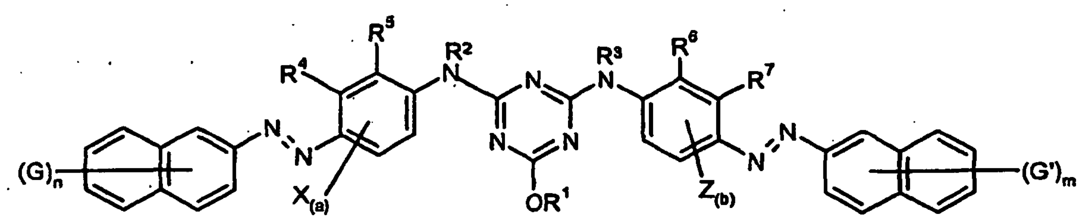

(XV)

Der Substituent $R^1$ ist Wasserstoff oder ein gegebenenfalls substituierter Alkylrest mit 1 bis 4 Kohlenstoffatomen, wobei der Substituent im Alkylrest $SO_3H$ sein kann.

Alle diese genannten Farbstoffe des Standes der Technik vermögen in der Praxis im Tintenstrahldruck nicht alle an sie gestellten Anforderungen zu erfüllen, insbesondere wenn es darum geht, mit Ihnen Aufzeichnungsflüssigkeiten herzustellen, die auf allen möglichen Aufnahmematerialien wie unbeschichtetem oder beschichtetem Papier, beschichteten oder unbeschichteten, opaken oder durchsichtigen Kunststoffträgern Bilder oder Färbungen mit maximaler Farbwiedergabe und einem Farbton von mehr als 85° zu erzeugen.

Aufzeichnungsflüssigkeiten für den Tintenstrahldruck müssen eine gute Löslichkeit der verwendeten Farbstoffe in der mehrheitlich wässrigen Aufzeichnungsflüssigkeiten aufweisen, sie müssen ins Aufnahmematerial eindringen und dürfen keine metallisch glänzenden Ablagerungen bei Bildstellen mit hoher optischer Dichte auf der Oberfläche des Aufzeichnungsmaterials bilden ("Bronzing"). Sie müssen Bilder mit einer hohen optischen Dichte, einer guten Wasserfestigkeit, einer guten Lichtechtheit und einer guten Lagerstabilität auch bei Anwesenheit von Luftverunreinigungen (beispielsweise Ozon) ergeben. Sie müssen in der Aufzeichnungsflüssigkeiten stabil sein, auch wenn diese lange Zeit unter ungünstigen Bedingungen gelagert wird.

Verschiedene Zusammensetzungen für Aufzeichnungsflüssigkeiten sind bereits vorgeschlagen worden. Typische Aufzeichnungsflüssigkeiten enthalten einen oder mehrere Farbstoffe oder Pigmente, Wasser, organische Hilfslösungsmittel und andere Zusätze.

Die Aufzeichnungsflüssigkeiten müssen die folgenden Anforderungen erfüllen:

(1) Die Aufzeichnungsflüssigkeit ergibt Bilder hochstehender Qualität auf allen möglichen Aufnahmematerialien.

(2) Die Aufzeichnungsflüssigkeit ergibt Bilder mit guter Wasserfestigkeit.

(3) Die Aufzeichnungsflüssigkeit ergibt Bilder mit guter Lichtbeständigkeit.

(4) Die Aufzeichnungsflüssigkeit ergibt Bilder mit guter Ozonbeständigkeit.

(5) Die Aufzeichnungsflüssigkeit ergibt Bilder mit hervorragender Diffusionsfestigkeit.

(6) Die Aufzeichnungsflüssigkeit ergibt Bilder ohne Ablagerungen auf der Oberfläche ("Bronzing").

(7) Die Aufzeichnungsflüssigkeit ergibt Bilder mit hervorragender Abriebfestigkeit.

(8) Die Aufzeichnungsflüssigkeit ergibt Bilder, welche lange Zeit bei hohen Temperaturen und hoher Luftfeuchtigkeit ohne Qualitätseinbusse gelagert werden können.

(9) Die Aufzeichnungsflüssigkeit verstopft die Tintenstrahldruckerdüsen nicht, auch wenn diese längere Zeit während Druckpausen nicht abgedeckt sind.

(10) Die Aufzeichnungsflüssigkeit kann lange Zeit ohne Qualitätsverlust gelagert werden.

(11) Die physikalischen Eigenschaften der Aufzeichnungsflüssigkeit, wie Viskosität, Leitfähigkeit und Oberflächenspannung liegen alle innerhalb vorgegebener, für die Anwendung geeigneter Grenzen.

(12) Die Aufzeichnungsflüssigkeit muss ungiftig, unbrennbar und unschädlich sein.

**Beschreibung der Erfindung**

Gegenstand der Erfindung ist die Bereitstellung neuer Bisazofarbstoffe mit brillanter zitronengelber Farbe, guter Lichtechtheit, guter Wasserfestigkeit, guter Diffusionsfestigkeit, guter Ozonbeständigkeit und sehr guter Wasserlöslichkeit. Die Farbstoffe müssen insbesondere im Tintenstrahldruck Bilder, vor allem auf nanoporösen Aufzeichnungsmaterialien, mit dem richtigen Gelbfarbton und guter Ozonbeständigkeit ergeben, die auch bei längerer Lagerung bei hoher Temperatur und Luftfeuchtigkeit nicht oder höchstens in unbedeutendem Ausmass unscharf werden und die auch die sonst erforderlichen Eigenschaften wie eine hohe Farbsättigung, eine gute Lichtechtheit und eine hohe Wasserfestigkeit aufweisen.
Ein weiteres Ziel der Erfindung ist die Bereitstellung flüssiger Farbstoffpräparationen, welche diese erfindungsgemässen Farbstoffe enthalten, insbesondere von Aufzeichnungsflüssigkeiten für den Tintenstrahldruck, welche auf allen möglichen Aufzeichnungsmaterialien wie unbeschichtetem oder beschichtetem Papier, beschichtetem oder unbeschichtetem, opakem oder durchsichtigem Kunststoffträger eine spektral unveränderte Farbe ergeben.
Ein weiteres Ziel der Erfindung ist die Bereitstellung von Aufzeichnungsflüssigkeiten, welche alle anderen vorhin erwähnten Anforderungen erfüllen.
Die vorliegende Erfindung bezieht sich auf neue Bisazofarbstoffe der allgemeinen Formel (V)

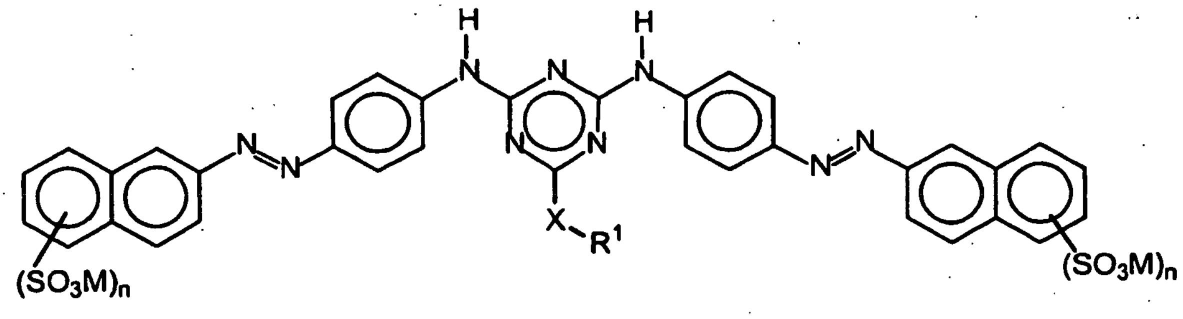

(V)

worin

X für Schwefel oder eine gegebenenfalls mit einem Alkylrest mit 1 bis 8 Kohlenstoffatomen substituierte Aminogruppe;

$R^1$ für einen Sulfoalkylrest $-(CH_2)_mSO_3M$;

M für Wasserstoff, ein Metallkation oder ein Ammoniumkation, das gegebenenfalls einen oder mehrere Alkylreste oder substituierte Alkylreste oder Hydroxyalkoxyalkylreste mit jeweils 1 bis 8 Kohlenstoffatomen aufweist, stehen;

m den Wert 2, 3 oder 4
und

n den Wert 2 oder 3 annehmen.

Bevorzugt sind Farbstoffe der allgemeinen Formel (V),
worin

X, M, $R^1$ und m die gleiche Bedeutung wie vorhin angegeben haben
und

n den Wert 2 annimmt.

Besonders bevorzugt sind Farbstoffe der allgemeinen Formel (V),
worin
X, $R^1$, M und m die gleiche Bedeutung wie vorhin angegeben haben
und
die $SO_3M$-Substituenten in den Positionen 4,8 oder 6,8 stehen.

Beim Substituenten M werden die Kationen der Alkalimetalle Lithium, Natrium und Kalium und das gegebenenfalls mit einem Alkylrest mit 1 bis 5 Kohlenstoffatomen oder einem eine Hydroxylgruppe enthaltenden Alkylrest mit 1 bis 5 Kohlenstoffatomen substituierte Ammmoniumkation bevorzugt. Farbstoffe, welche ein solchermassen substituiertes Ammoniumkation enthalten, zeigen eine besonders hohe Löslichkeit.

Die hergestellten Farbstoffe der allgemeinen Formel (V) sind zusammen mit ihrem Absorptionsmaximum in wässriger Lösung in Tabelle 1 aufgeführt.

Tabelle 1

| Farbstoff Nr. | Positionen von $SO_3M$ | X | $R^1$ | M | $\lambda_{max}$ in $H_2O$ (nm) bei pH 7.0 |
|---|---|---|---|---|---|
| 10 | 4,8 | S | $-(CH_2)_3SO_3M$ | Na | 370 |
| 11 | 4,8 | NH | $-(CH_2)_2SO_3M$ | Na | 396 |
| 12 | 4,8 | NH | $-(CH_2)_2SO_3M$ | Li | 393 |
| 13 | 4,8 | NH | $-(CH_2)_2SO_3M$ | K | 392 |
| 14 | 4,8 | $NCH_3$ | $-(CH_2)_2SO_3M$ | Na | 399 |
| 15 | 6,8 | S | $-(CH_2)_3SO_3M$ | Na | 363 |
| 16 | 6,8 | NH | $-(CH_2)_2SO_3M$ | Na | 393 |
| 17 | 6,8 | $NCH_3$ | $-(CH_2)_2SO_3M$ | Na | 395 |

Die Erfindung bezieht sich auch auf ein Verfahren zur Herstellung der erfindungsgemässen Farbstoffe der allgemeinen Formel (V), das dadurch gekennzeichnet ist, dass
zwei Einheiten eines Chromophors der allgemeinen Formel (VI),

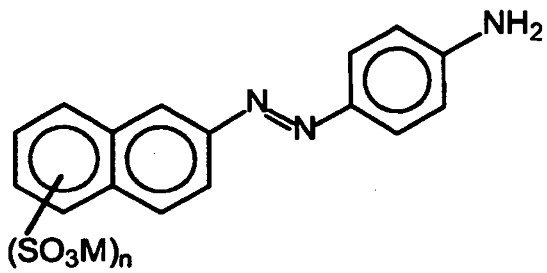

(VI)

worin M und n die gleiche Bedeutung wie vorhin angegeben haben,
in Gegenwart einer Base mit einer Einheit Cyanurchlorid unter Bildung des Farbstoffzwischenprodukts der allgemeinen Formel (VII)

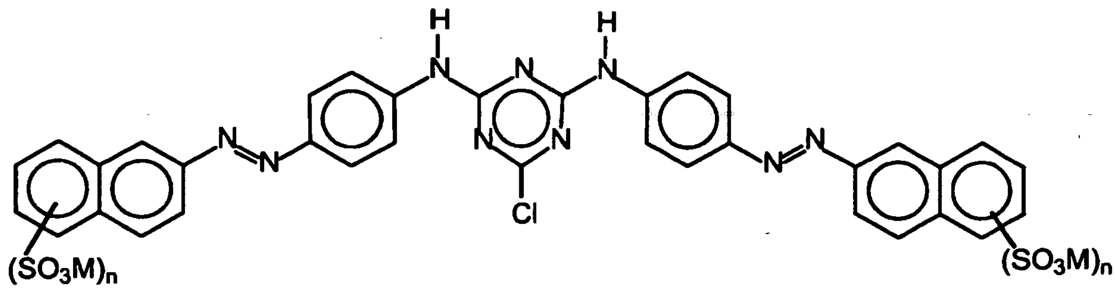

(VII)

kondensiert werden
und
anschliessend dieses Farbstoffzwischenprodukt der allgemeinen Formel (VII) mit einer Verbindung der Formel (VIII)

$HX\text{-}(CH_2)_mSO_3M$ (VIII)

worin X, M und n die gleiche Bedeutung wie vorhin angegeben haben,
unter Bedingungen umgesetzt wird, dass die Farbstoffe der allgemeinen Formel (V) gebildet werden.

Die Bisazofarbstoffe der allgemeinen Formel (V) können als freie Säuren oder als anorganische oder organische Salze dieser Säuren vorliegen. Vorzugsweise liegen sie in Form ihrer Alkali- oder Ammoniumsalze oder deren Gemische vor, wobei das Ammoniumkation substituiert sein kann. Beispiele solcher substituierter Ammoniumkationen sind 2-Hydroxyethylammonium, Bis-(2-hydroxyethyl)-ammonium, Tris-(2-hydroxyethyl)-ammonium, Bis-(2-hydroxyethyl)-methyl-ammonium, Tris-[2-(2-methoxyethoxy)-ethyl]-ammonium, 8-Hydroxy-3,6-dioxaoctylammonium, und Tetraalkylammonium wie beispielsweise Tetramethylammonium oder Tetrabutylammonium oder Pyridinium.

Weiter betrifft die Erfindung nicht nur reine Bisazofarbstoffe der allgemeinen Formel (V), sondern auch Gemische solcher Bisazofarbstoffe.

Die erfindungsgemässen Bisazoarbstoffe der allgemeinen Formel (V) färben cellulosehaltige Materialien, Papier, Baumwolle und Viskose sowie Leder und Wolle mit guten Nass- und Lichtechtheiten.
Die erfindungsgemässen Bisazoarbstoffe der allgemeinen Formel (V) können nach allen in der Papier- und Textilindustrie für Substantivfarbstoffe gebräuchlichen Verfahren verwendet werden, insbesondere in der Massen- wie in der Oberflächenbehandlung von Papier für geleimte oder ungeleimte Sorten. Sie können auch in der Garn- und Stückfärberei von Baumwolle, Viskose und Leinen nach dem Ausziehverfahren oder im kontinuierlichen Verfahren angewandt werden.
Die Erfindung betrifft weiter flüssige Farbstoffpräparationen, die mindestens einen erfindungsgemässen Bisazoarbstoffe der allgemeinen Formel (V) enthalten. Diese Anwendungsform ist insbesondere beim Färben von Papier bevorzugt. Die Herstellung von stabilen, flüssigen, vorzugsweise wässrigen, konzentrierten Färbepräparaten kann auf allgemein bekannte Weise erfolgen, vorteilhaft durch Lösen in geeigneten Lösungsmitteln. Von besonderem Vorteil ist die Herstellungsmöglichkeit solcher stabilen, wässrig-konzentrierten Präparationen im Zuge der Farbstoffsynthese selbst ohne Zwischenisolierung des Farbstoffs, beispielsweise nach einer Entsalzung der Reaktionslösung durch Diafiltration.

Solche flüssigen Farbstoffpräparationen können nicht nur Bisazofarbstoffe der allgemeinen Formel (V) enthalten, sondern zusätzlich noch andere Gelbfarbstoffe wie Säuregelb 17, Säuregelb 23, Direktgelb 132, Direktgelb 86 oder Gelbfarbstoffe, welche in den Patentanmeldungen WO 96/24'635 und EP 0'755'984 beschrieben werden.

In der Patentanmeldung WO 96/24'635 werden Gelbfarbstoffe der allgemeinen Formel (X) beschrieben,

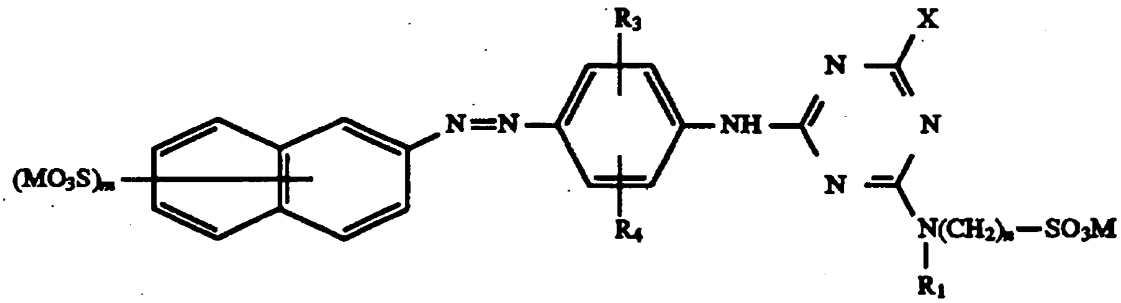

(X)

worin

M für Wasserstoff, ein einwertiges Metallkation, ein Ammoniumkation oder ein mit einem Alkylrest, einem Alkoxyalkylrest oder einem Hydroxyalkylrest mit je 1 bis 12 Kohlenstoffatomen substituiertes Ammoniumkation;

$R_1$ für Wasserstoff oder einen aliphatischen Alkylrest mit 1 bis 6 Kohlenstoffatomen;

$R_3$, $R_4$ unabhängig voneinander für Wasserstoff, einen aliphatischen Alkylrest, einen Alkoxylrest oder einen Acylaminorest mit je bis zu 3 Kohlenstoffatomen;

X für $NR_5R_6$,
worin
$R_5$, $R_6$ unabhängig voneinander für Wasserstoff, einen Alkylrest mit 1 bis 6 Kohlenstoffatomen, einen substituierten Alkylrest mit 2 bis 6 Kohlenstoffatomen, worin die Substituenten aus der Gruppe bestehend aus OH, $OCH_3$, COOM und $SO_3M$ ausgewählt werden; einen Aralkylrest, einen Arylrest oder einen mit COOM oder $SO_3M$ substituierten Arylrest stehen; oder $R_5$ und $R_6$ einen Ring mit oder ohne Einschluss eines Heteroatoms bilden;oder

X für $SR_7$,
worin
$R_7$ für einen unsubstituierten Alkylrest mit 1 bis 6 Kohlenstoffatomen, einen substituierten Alkylrest mit 2 bis 6 Kohlenstoffatomen, worin die Substituenten aus der Gruppe bestehend aus OH, $OCH_3$, COOM und $SO_3M$ ausgewählt werden;oder

X für $OR_8$, worin
$R_8$ für Wasserstoff oder einen aliphatischen Alkylrest mit 1 bis 6 Kohlenstoffatomenstehen
und

m den Wert 1, 2 oder 3 annimmt und die $SO_3M$-Substituenten sich in den Positionen 4,8; 5,7; 6, 8; 3, 6, 8; oder 4,6,8 befinden und im Fall, wo m den Wert 1 annimmt, der $SO_3M$-Substituent sich auch in den Positionen 1 oder 4 bis 8 befinden kann.

In der Patentanmeldung EP 0'755'984 werden Gelbfarbstoffe der allgemeinen Formel (XI) beschrieben,

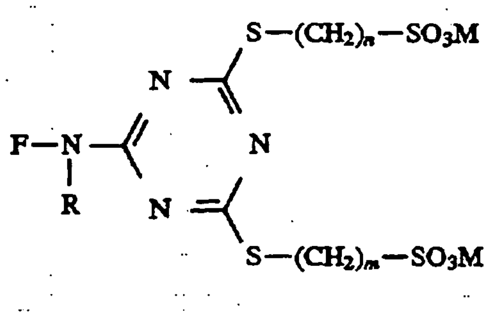

(XI)

worin

| | |
|---|---|
| F | für einen Monoazofarbstoffrest; |
| R | für Wasserstoff oder einen aliphatischen Alkylrest mit 1 bis 6 Kohlenstoffatomen; |
| M | für Wasserstoff, ein einwertiges Metallkation, ein Ammoniumkation oder ein mit einem Alkylrest, einem Alkoxyalkylrest oder einem Hydroxyalkylrest mit je 1 bis 12 Kohlenstoffatomen steht und |
| m, n | unabhängig voneinander einen Wert zwischen 2 und 6 annehmen. |

Die erfindungsgemässen Bisazofarbstoffe oder Mischungen der erfindungsgemässen Bisazofarbstoffe der allgemeinen Formel (V) sind ausgezeichnete Farbstoffe zur Herstellung von gelben Aufzeichnungsflüssigkeiten für den Tintenstrahldruck. Auch diese Aufzeichnungsflüssigkeiten können zusätzlich noch andere Gelbfarbstoffe enthalten wie Säuregelb 17, Säuregelb 23, Direktgelb 132, Direktgelb 86 oder Gelbfarbstoffe, welche in den Patentanmeldungen WO 96/24'635 und EP 0'755'984 beschrieben werden.

Eine solche gelbe Aufzeichnungsflüssigkeit enthält eine oder mehrere der erfindungsgemässen Bisazofarbstoffe in einem flüssigen, vorwiegend wässrigen Lösungsmittel und gegebenenfalls weitere Gelbfarbstoffe. Die Aufzeichnungsflüssigkeit enthält 0.5 Gewichtsprozent bis 20 Gewichtsprozent, vorzugsweise 0.5 Gewichtsprozent bis 8 Gewichtsprozent dieser erfindungsgemässen Bisazofarbstoffe bezogen auf das Gesamtgewicht der Aufzeichnungsflüssigkeit. Das flüssige Lösungsmittel besteht vorzugsweise aus Wasser oder aus einer Mischung von Wasser und mit Wasser mischbaren organischen Lösungsmitteln. Geeignete Lösungsmittel werden beispielsweise in den Patenten US 4'626'284, US 4'703'113 und US 4'963'189 und den Patentanmeldungen GB 2'289'473, EP 0'425'150 und EP 0'597'672 beschrieben.

Besonders vorteilhaft ist ein Verfahren zum Bedrucken eines textilen Materials mit einer solchen gelben Aufzeichnungsflüssigkeit, in welchem in einem ersten Schritt die Aufzeichnungsflüssigkeit mit Hilfe eines Tintenstrahldruckers auf das textile Material aufgebracht wird und in einem zweiten Schritt der Farbstoff durch Erwärmung auf eine Temperatur zwischen 60° C und 130° C fixiert wird.

Die vorliegende Erfindung wird durch die folgenden Beispiele näher beschrieben, ohne dass dadurch die beanspruchten Bisazofarbstoffe in irgendeiner Weise eingeschränkt werden.

**Beispiele**

**Beispiel 1**

<u>Herstellung des Farbstoffzwischenprodukts</u>

Das Farbstoffzwischenprodukt der Formel (XII)

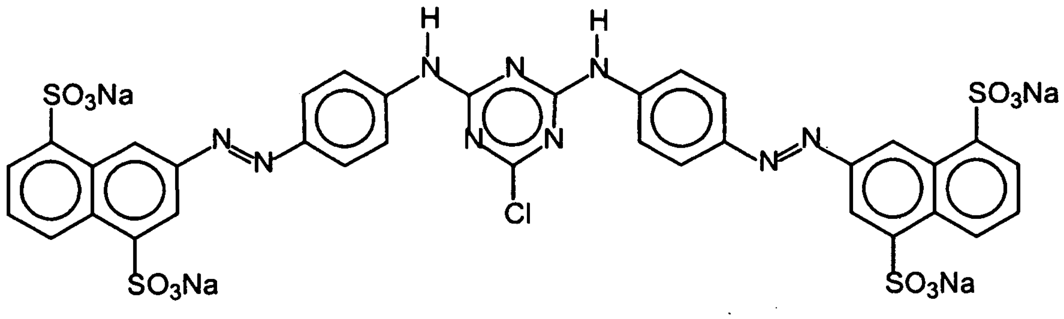

(XII)

wird folgendermassen hergestellt:
614 g des Dinatriumsalzes der 3-[(4-Aminophenyl)azo]-Naphthalin-1,5-disulfonsäure mit einem Gehalt von 77.5 % (1.054 Mol) werden bei einer Temperatur von 65° C in 4900 ml Wasser gelöst. Die warme Lösung (65° C) wird durch 20 g Silikagel druckfiltriert. Das pH wird auf einen Wert zwischen 7.0 und 8.0 eingestellt. Dann wird die Filtriereinrichtung mit 100 ml warmem Wasser gespült und das Filtrat auf eine Temperatur von 0° C abgekühlt. Während 30 Minuten werden 92.8 g Cyanurchlorid (0.504 Mol) (erhältlich bei Fluka Chemie GmbH, Buchs, Schweiz) portionenweise bei einer Temperatur zwischen 0° C et 5° C zugegeben und das pH durch gleichzeitige Zugabe einer wässrigen Lösung (30 %) von Natriumhydroxid auf einem Wert zwischen 4.0 et 6.0 gehalten. Das Reaktionsgemisch wird dann auf Raumtemperatur aufgewärmt und anschliessend auf eine Temperatur von 60° C erhitzt, wobei der pH-Wert durch gleichzeitige Zugabe einer wässrigen Lösung (30 %) von Natriumhydroxid zwischen 6.5 et 7.0 gehalten wird. Es wird 2 Stunden bei einer Temperatur von 60° C nachgerührt, anschliessend das pH auf einen Wert zwischen 7.0 und 7.2 eingestellt und das Gemisch zuerst auf eine Temperatur von 20° C und nachher auf eine Temperatur von 5° C abgekühlt. Der Niederschlag wird unter Vakuum abfiltriert und im Vakuum bei einer Temperatur von 50° C getrocknet. Man erhält so 573 g des Farbstoffzwischenprodukts der Formel (XII).

Herstellung des Bisazofarbstoffs Nr. 10

Unter Rühren werden 57 g (0.05 Mol) des Farbstoffzwischenprodukts der Formel (XII) in 360 ml Wasser suspendiert. Anschliessend werden 14.4 g des Natriumsalzes der 3-Mercapto-propan-1-sulfonsäure, (erhältlich bei Raschig GmbH, Ludwigshafen, Deutschland) mit einem Gehalt von 93 % zugegeben und das pH durch Zugabe einer wässrigen Lösung (30 %) von Natriumhydroxid auf einen Wert von 10.0 eingestellt. Dann werden 5.3 g Natriumcarbonat zum Gemisch zugegeben, dieses wird auf eine Temperatur von 80° C aufgeheizt und es wird 5 Stunden bei dieser Temperatur gerührt. Das pH wird durch Zugabe von Essigsäure auf einen Wert von 6.5 eingestellt und die Lösung klarfiltriert. Nach Abkühlung der Lösung auf eine Temperatur von 20° C wird der Farbstoff durch Zugabe von Natriumacetat und Methanol ausgefällt. Das Gemisch wird 2 Stunden gerührt und der Niederschlag durch Vakuumfiltration isoliert. Der Niederschlag wird mit einer Mischung von Wasser und Methanol (1 : 1 volumenmässig) gewaschen und anschliessend im Vakuum bei einer Temperatur von 60° C getrocknet. Man erhält so 35 g des Bisazofarbstoffs Nr. 10.

**Beispiel 2**

Herstellung des Bisazofarbstoffs Nr. 11

Unter Rühren werden 114 g (0.10 Mol) des Farbstoffzwischenprodukts der Formel (XII) aus Beispiel 1 in 300 ml Wasser suspendiert. Die Suspension wird 30 Minuten bei einer Temperatur von 20° C gerührt. Anschliessend wird ein Gemisch von 17.5 g Taurin (0.14 Mol), 280 ml Wasser, 16 g einer wässrigen Lösung (30 %) von Natriumhydroxid und 16.0 g Natriumcarbonat zugegeben und das Gemisch unter Rückfluss auf eine Temperatur von 100° C erhitzt. Bei einer Temperatur von 70° C wird das Gemisch klar. Nach 2 Stunden Rührung bei einer Temperatur von 100° C wird das Gemisch auf eine Temperatur von 20° C abgekühlt. Das pH wird durch Zugabe von Essigsäure auf einen Wert zwischen 5.5 und 6.0 eingestellt und das Gemisch über Nacht bei einer Temperatur von 20° C weitergerührt. Der orangefarbene Festkörper wird unter Vakuum abfiltriert.
Der feuchte Festkörper wird in 600 ml Wasser suspendiert und das Gemisch auf eine Temperatur von 70° C erhitzt.

Das pH wird durch Zugabe einer wässrigen Lösung (30 %) von Natriumhydroxid auf einen Wert von 8.0 eingestellt. Es wird 30 Minuten bei einer Temperatur von 70° C gerührt und anschliessend werden 4 g Silikagel zur trüben Lösung zugegeben. Das Gemisch wird bei einer Temperatur von 60° C klarfiltriert. Dann wird die Filtriereinrichtung mit 20 ml Wasser gespült Zum Filtrat werden bei einer Temperatur von 60° C tropfenweise 860 ml Ethanol (95 %) zugegeben. Das Gemisch wird auf eine Temperatur von 5° C abgekühlt und es wird eine Stunde bei dieser Temperatur gerührt. Der Niederschlag wird unter Vakuum abfiltriert. Der Niederschlag wird mit 140 ml Ethanol (95 %) gewaschen und anschliessend im Vakuum bei einer Temperatur von 70° C getrocknet. Man erhält so 112 g des Bisazofarbstoffs Nr. 11.

Auf ähnliche Art und Weise können durch die Wahl geeigneter Ausgangsmaterialien die erfindungsgemässen Bisazofarbstoffe Nr. 12 bis Nr. 17 hergestellt werden.

**Herstellungsbeispiel für Aufzeichnungsflüssigkeiten**

Die vorliegende Erfindung wird, soweit sie sich auf Aufzeichnungsflüssigkeiten bezieht, durch die folgenden Beispiele beschrieben, in denen erfindungsgemässe Bisazoarbstoffe aus Tabelle 1 und Farbstoffe des Standes der Technik eingesetzt werden. 100 g jeder Aufzeichnungsflüssigkeit werden hergestellt, indem 2. 0 - 5.0 g Farbstoff, 6.0 g Ethylenglykol, 3.0 g Propylen-1,2-glykol, 3.0 g 1-Methyl-2-pyrrolidon, 0.3 g einer wässrigen Lösung (50 %) von Olin® 10G (erhältlich bei Arch Chemicals Inc., Norwalk, USA), 0.3 g Surfinol® 465 (erhältlich bei Air Products and Chemicals Inc., Allentown, USA) und 0.1 g Mergal® K 10N (erhältlich bei Riedel-de-Haën, Seelze, Deutschland) (0.2 g) zusammen mit Wasser etwa 1 Stunde unter Rühren auf eine Temperatur von 50° C erwärmt werden. Die erhaltene Lösung wird auf eine Temperatur von 20° C abgekühlt und ihr pH-Wert auf 7.5 eingestellt. Anschliessend wird die Lösung durch ein Millipore®-Filter mit 0.3 $\mu$m Porendurchmesser abfiltriert. Die Farbstoffmenge wird so gewählt, dass die optische Dichte der gedruckten Bilder für alle Farbstoffe möglichst gleich ist.

**Bildherstellung**

Anschliessend werden mit diesen Aufzeichnungsflüssigkeiten homogene Farbfelder der ungefähren Dichte 1.40 mit Hilfe eines Tintenstrahldruckers des Typs BJC 8500 von CANON auf die folgenden handelsüblichen Aufzeichnungsmaterialien aufgebracht:

A: HP Printing Paper HPP 1122 (Papier)
B: HP Premium Plus (Aufzeichnungsmaterial auf Polymerbasis)
C: ILFORD Galerie Smooth Glossy (nanoporöses Aufzeichnungsmaterial)
D: ILFORD Printasia Premium Photo Glossy Paper (nanoporöses Aufzeichnungsmaterial)
E: ILFORD Galerie Classic Gloss Paper (Aufzeichnungsmaterial auf Polymerbasis)
F: EPSON Premium Glossy Photo Paper (nanoporöses Aufzeichnungsmaterial)
G: CANON Photo Paper Pro PR-101 (nanoporöses Aufzeichnungsmaterial)

Diese Farbfelder werden zur Bestimmung der Lichtechtheit, der Farbsättigung und der Ozonbeständigkeit verwendet.

**Prüfungen**

1. Farbstofflöslichkeit

Die Farbstofflöslichkeit wird spektrophotometrisch im UV und im sichtbaren Spektralbereich bestimmt. Die Spektren der erfindungsgemässen reinen Bisazoarbstoffe werden bei einem pH-Wert von 7.0 in gepufferter wässriger Lösung bestimmt. Dazu werden bei einer Temperatur von 50° C gesättigte wässrige Lösungen der Farbstoffe hergestellt. Anschliessend werden diese Lösungen auf eine Temperatur von 20° C abgekühlt und nach einer Wartezeit von 24 Stunden für die Messungen derart verdünnt, das die Absorption beim Absorptionsmaximum zwischen 0.8 und 1.5 liegt. Auf Grund des Verdünnungsfaktors kann so die Löslichkeit für jeden Farbstoff berechnet werden.

2. Farbsättigung

Die Farbkoordinaten L*a*b* der quadratischen Farbfelder werden mit einem Spektrophotometer Spectrolino® (erhältlich bei Gretag Macbeth, Regensdorf, Schweiz) in Reflexion bei der Lichtart $D_{65}$ gemessen.
Die Sättigung C* wird aus den gemessenen Farbkoordinaten nach der Formel

$$C^* = \sqrt{a^{*2} + b^{*2}}$$

berechnet. Brillante Farbstoffe haben einen hohen C*-Wert.

3. Lichtechtheit

Die bedruckten Muster werden in einem Weather-Ometer® Ci35A (erhältlich bei Atlas Material Testing Technology, Chicago, USA) bei einer Temperatur von 20° C und einer relativen Luftfeuchtigkeit von 50 % mit einer 6500 W Xenon-Lampe so lange bestrahlt, bis 20 Megaluxstunden erreicht sind. Der Dichteverlust wird mit einem Spektrophotometer Spectrolino® gemessen. Der prozentuale Dichteverlust ausgehend von der ursprünglichen Dichte ist ein Mass für die Lichtechtheit der Farbstoffe auf dem bedruckten Aufzeichnungsmaterial.

4. Farbstoffdiffusion

Für diese Prüfung werden quadratische Farbfelder mit einer Fläche von 1 $cm^2$ der integralen Dichte 1.4 mit Hilfe eines Tintenstrahldruckers des Typs BJC 8500 von CANON gedruckt, welche ein fein abgestuftes Liniengitter aufweisen, bei dem die Quadrate eine Länge von 8 Pixeln und die Linien eine Breite von 2 Pixeln aufweisen. Die bedruckten Muster werden 24 Stunden bei einer relativen Luftfeuchtigkeit von 59 % getrocknet. Die optische Dichte dieser quadratischen Farbfelder wird mit einem Spektrophotometer Spectrolino® gemessen. Anschliessend werden die bedruckten Muster während 7 Tagen in einem Klimaprüfschrank WK 111 (erhältlich bei Weiss Umwelttechnik GmbH, Reiskirchen-Lindenstruth, Deutschland) bei einer Temperatur von 40° C und einer relativen Feuchtigkeit von 80 % gelagert. Bei dieser Lagerung kann Farbstoff in die weissen Stellen des Gitters diffundieren, was zu einer Dichtezunahme führt. Nach abgeschlossener Lagerung werden die Muster erneut ausgemessen. Die Dichtezunahme in Prozenten vor und nach der Lagerung ist ein Mass für die Farbstoffdiffusion.

5. Ozonbeständigkeit

Die optische Dichte der quadratischen Farbfelder wird mit einem Spektrophotometer Spectrolino® gemessen. Anschliessend werden die bedruckten Muster in einer Ozonkammer 903 (erhältlich bei Satra-Hampden, Kettering, Grossbritannien) bei einer Temperatur von 30° C, einer relativen Luftfeuchtigkeit von 50 % und einer Ozonkonzentration von 1 ppm bei einer Geschwindigkeit der zirkulierenden, ozonhaltigen Luft von 13 mm/s während einer bestimmten Zeit (beispielsweise 48 Stunden) gelagert. Nach abgeschlossener Lagerung werden die Muster erneut ausgemessen. Die Dichteunterschiede in Prozenten vor und nach der Lagerung sind ein Mass für das Ausmass des Farbstoffverlusts durch die Einwirkung des Ozons.

**Ergebnisse**

Auf Grund der Ergebnisse der obigen Prüfungen werden die Farbstoffe für jede Prüfung in 4 Klassen eingeteilt:

A: sehr gut
B: gut
C: mittelmässig
D: ungenügend

Die gemessenen Löslichkeiten der erfindungsgemässen Bisazofarbstoffe sowie einiger Farbstoffe des Standes der Technik sind in Tabelle 2 zusammengestellt.

Tabelle 2

| Farbstoff Nr. | Gewichtsprozent | Klasse |
|---|---|---|
| 10 | 26 | A |
| 11 | 17 | . B |
| 14 | 18 | B |
| 15 | 29 | A |

(fortgesetzt)

| Farbstoff Nr. | Gewichtsprozent | Klasse |
|---|---|---|
| 16 | 26 | A |
| 17 | 27 | A |
| I | 16 | C |
| II | 16 | C |
| III | 12 | D |
| IV | 26 | A |

Ein Vergleich der Ergebnisse in Tabelle 2 zeigt sofort, dass alle erfindungsgemässen Bisazofarbstoffe eine sehr gute oder eine gute Wasserlöslichkeit haben. Einzig der Farbstoff der Formel (IV) des Standes der Technik zeigt eine ebenso hohe Wasserlöslichkeit.

Die gemessenen Farbsättigungen C* der erfindungsgemässen Bisazofarbstoffe sowie einiger Farbstoffe des Standes der Technik sind in Tabelle 3 zusammengestellt.

Tabelle 3

| Farbstoff Nr. | Farbsättigung C* (Klasse) auf Aufzeichnungsmaterial | | | | | | |
|---|---|---|---|---|---|---|---|
| | A | B | C | D | E | F | G |
| 10 | A | A | A | A | A | A | A |
| 11 | A | A | A | A | A | A | A |
| 14 | A | A | A | A | A | A | A |
| 15 | B | B | B | B | C | B | B |
| 16 | C | B | A | B | C | A | B |
| 17 | D | B | A | C | C | B | B |
| I | B | A | A | A | A | A | A |
| II | D | D | D | D | D | D | D |
| III | A | A | A | A | A | A | A |
| IV | C | B | C | D | B | A | B |

Ein Vergleich der Ergebnisse in Tabelle 3 zeigt sofort, dass insbesondere die erfindungsgemässen Bisazofarbstoffe Nr. 10, 11 und 14 eine sehr hohe Brillanz zeigen und deshalb auf allen Aufzeichnungsmaterialien brillante Gelbtöne ergeben. Keiner der Farbstoffe des Standes der Technik ergibt auf allen Aufzeichnungsmaterialien derart brillante Gelbtöne.

Die gemessenen Lichtechtheiten der erfindungsgemässen Bisazofarbstoffe sowie einiger Farbstoffe des Standes der Technik sind in Tabelle 4 zusammengestellt.

Tabelle 4

| Farbstoff Nr. | Lichtechtheit (Klasse) auf Aufzeichnungsmaterial | | | | | | |
|---|---|---|---|---|---|---|---|
| | A | B | C | D | E | F | G |
| 10 | B | A | A | B | B | B | B |
| 11 | B | A | A | B | B | A | A |
| 14 | B | A | A | B | B | B | B |
| 15 | B | A | B | B | B | B | B |
| 16 | B | A | B | B | B | B | B |
| 17 | B | A | A | B | B | B | B |

(fortgesetzt)

| Farbstoff Nr. | Lichtechtheit (Klasse) auf Aufzeichnungsmaterial | | | | | | |
|---|---|---|---|---|---|---|---|
| | A | B | C | D | E | F | G |
| I | A | A | B | B | B | A | B |
| II | B | D | B | B | B | A | A |
| III | C | A | B | B | B | B | B |
| IV | C | A | D | C | C | B | B |

Ein Vergleich der Ergebnisse in Tabelle 4 zeigt sofort, dass alle erfindungsgemässen Bisazofarbstoffe auf allen Aufzeichnungsmaterialien eine sehr gute oder gute Lichtstabilität besitzen. Einzig der Farbstoff (I) des Standes der Technik zeigt auf allen Aufzeichnungsmaterialien eine sehr gute oder gute Lichtstabilität. Die Farbstoffe der Formeln (II), (III) und (IV) des Standes der Technik zeigen auf einigen Aufzeichnungsmaterialien eine mittelmässige oder eine ungenügende Lichtstabilität und können deshalb nicht ohne Einschränkung in Aufzeichnungsflüssigkeiten für den Tintenstrahldruck verwendet werden.

Die gemessenen Diffusionsfestigkeiten der erfindungsgemässen Bisazofarbstoffe sowie einiger Farbstoffe des Standes der Technik sind in Tabelle 5 zusammengestellt.

Tabelle 5

| Farbstoff Nr. | Diffusionsfestigkeit (Klasse) auf Aufzeichnungsmaterial | | | | | | |
|---|---|---|---|---|---|---|---|
| | A | B | C | D | E | F | G |
| 10 | A | C | B | B | A | A | A |
| 11 | A | B | B | A | A | A | A |
| 14 | A | B | B | A | B | A | A |
| 15 | A | C | C | B | B | B | B |
| 16 | A | C | A | A | B | A | A |
| 17 | A | C | B | A | B | B | B |
| I | B | C | C | A | C | C | A |
| II | A | D | C | B | C | C | A |
| III | A | D | C | C | D | D | A |
| IV | A | C | B | A | B | A | B |

Ein Vergleich der Ergebnisse in Tabelle 5 zeigt sofort, dass insbesondere die erfindungsgemässen Bisazofarbstoffe Nr. 11 und 14 auf allen Aufzeichnungsmaterialien eine sehr gute Diffusionsfestigkeit besitzen und deshalb ohne Einschränkung in Aufzeichnungsflüssigkeiten für den Tintenstrahldruck verwendet werden können. Alle Farbstoffe des Standes der Technik zeigen auf mindestens einem Aufzeichnungsmaterialien eine mittelmässige oder eine ungenügende Diffusionsfestigkeit und können deshalb nicht ohne Einschränkung in Aufzeichnungsflüssigkeiten für den Tintenstrahldruck verwendet werden.

Die gemessenen Ozonbeständigkeiten der erfindungsgemässen Bisazofarbstoffe sowie einiger Farbstoffe des Standes der Technik sind in Tabelle 6 zusammengestellt. Da die Ozonbeständigkeit einzig bei nanoporösen Aufzeichnungsmaterialien ein Problem darstellt, sind in Tabelle 6 nur die Ergebnisse für die nanoporösen Aufzeichnungsmaterialien C, D, F und G zusammengestellt.

Tabelle 6

| Farbstoff | Ozonbeständigkeit (Klasse) auf Aufzeichnungsmaterial | | | |
|---|---|---|---|---|
| | C | D | F | G |
| 10 | A | A | A | A |
| 11 | A | A | A | A |

(fortgesetzt)

| Farbstoff | Ozonbeständigkeit (Klasse) auf Aufzeichnungsmaterial | | | |
|---|---|---|---|---|
| | C | D | F | G |
| 14 | A | A | A | A |
| 15 | B | A | A | A |
| 16 | A | A | A | A |
| 17 | B | A | A | A |
| I | A | B | A | A |
| II | A | B | A | A |
| III | D | B | C | C |
| IV | A | B | A | A |

Ein Vergleich der Ergebnisse in Tabelle 6 zeigt sofort, dass alle erfindungsgemässen Bisazofarbstoffe auf allen nanoporösen Aufzeichnungsmaterialien eine sehr gute oder eine gute Ozonbeständigkeit besitzen und deshalb ohne Einschränkung in Aufzeichnungsflüssigkeiten für den Tintenstrahldruck verwendet werden können.

**Patentansprüche**

1. Bisazofarbstoffe der allgemeinen Formel (V)

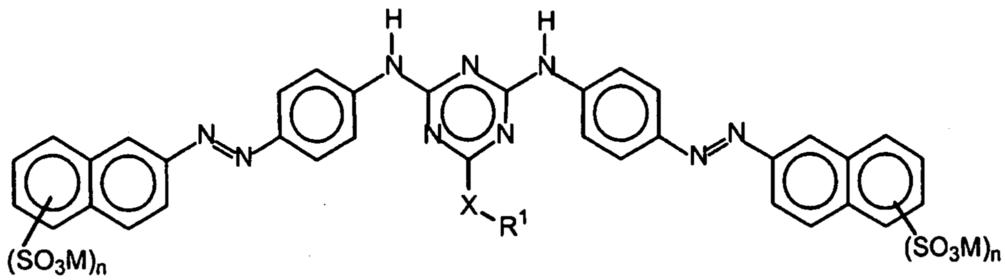

(V)

worin

X für Schwefel oder eine gegebenenfalls mit einem Alkylrest mit 1 bis 8 Kohlenstoffatomen substituierte Aminogruppe;
$R^1$ für einen Sulfoalkylrest $-(CH_2)_mSO_3M$;
M für Wasserstoff, ein Metallkation oder ein Ammoniumkation, das gegebenenfalls einen oder mehrere Alkylreste oder substituierte Alkylreste oder Hydroxyalkoxyalkylreste mit jeweils 1 bis 8 Kohlenstoffatomen aufweist, stehen;
m den Wert 2, 3 oder 4
und
n den Wert 2 oder 3 annehmen.

2. Bisazofarbstoffe gemäss Anspruch 1, **dadurch gekennzeichnet, dass**

n den Wert 2 annimmt.

3. Bisazofarbstoffe gemäss Anspruch 2, **dadurch gekennzeichnet, dass** die $SO_3M$-Substituenten in den Positionen 4,8 oder 6,8 stehen.

**4.** Bisazofarbstoffe gemäss einem der Ansprüche 2 oder 3, **dadurch gekennzeichnet, dass**

M das Kation eines der Alkalimetalle Lithium, Natrium und Kalium oder das gegebenenfalls mit einem Alkylrest mit 1 bis 5 Kohlenstoffatomen oder einem eine Hydroxylgruppe enthaltenden Alkylrest mit 1 bis 5 Kohlenstoffatomen substituiertes Ammmoniumkation ist.

**5.** Verfahren zur Herstellung der Bisazofarbstoffe gemäss Anspruch 1, **dadurch gekennzeichnet, dass** zwei Einheiten eines Chromophors der allgemeinen Formel (VI),

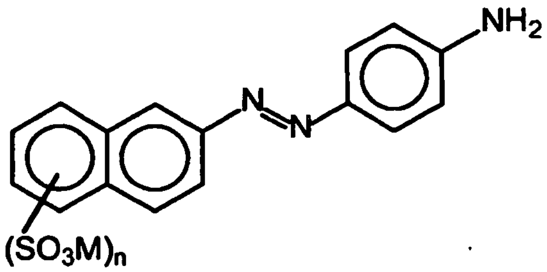

(VI)

worin M und n die gleiche Bedeutung wie in Anspruch 1 haben,
in Gegenwart einer Base mit einer Einheit Cyanurchlorid unter Bildung des Farbstoffzwischenprodukts der Formel (VII)

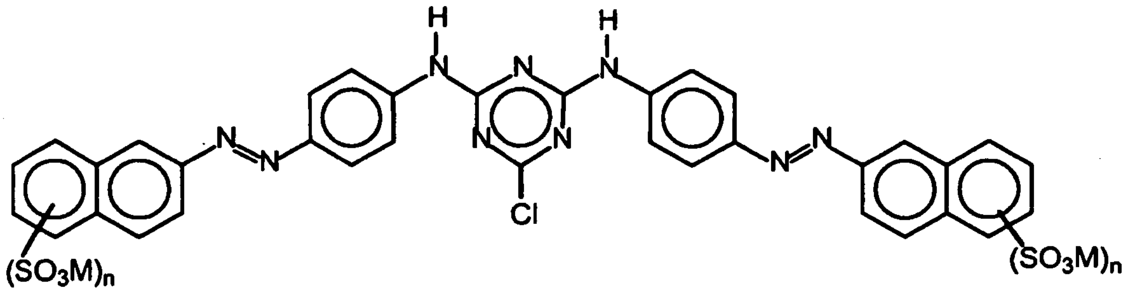

(VII)

kondensiert werden
und
anschliessend dieses Farbstoffzwischenprodukt mit einer Verbindung der Formel (VIII)

$$HX\text{-}(CH_2)_mSO_3M \qquad (VIII)$$

worin X, M und n die gleiche Bedeutung wie in Anspruch 1 haben,
unter Bedingungen umgesetzt wird, dass der Bisazoarbstoff der allgemeinen Formel (V) gebildet wird.

**6.** Verwendung der Bisazofarbstoffe gemäss einem oder mehreren der Ansprüche 1 bis 4 zum Aufzeichnen von Schrift und Bildern auf Aufzeichnungsmaterialien, zum Färben und Bedrucken von natürlichen oder synthetischen Fasermaterialen, nanoporösen Materialien, Leder und Aluminium.

**7.** Flüssige Farbstoffpräparationen, welche mindestens einen Bisazofarbstoff oder eine Mischung von Bisazofarbstoffen gemäss einem oder mehreren der Ansprüche 1 bis 4 enthalten.

**8.** Flüssige Farbstoffpräparationen gemäss Anspruch 7, welche zusätzlich noch einen oder mehrere andere Gelbfarbstoffe enthalten.

**9.** Flüssige Farbstoffpräparationen gemäss Anspruch 8, **dadurch gekennzeichnet, dass** die zusätzlichen Gelbfarbstoffe aus der Gruppe bestehend aus Farbstoffen der allgemeinen Formel (X),

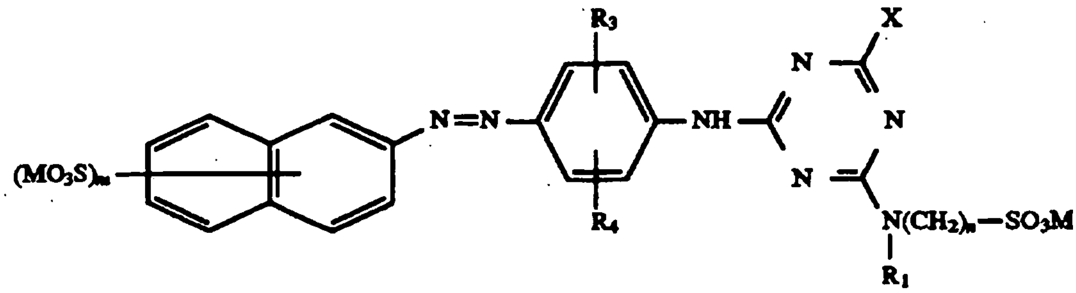

(X)

worin

M für Wasserstoff, ein einwertiges Metallkation, ein Ammoniumkation oder ein mit einem Alkylrest, einem Alkoxyalkylrest oder einem Hydroxyalkylrest mit je 1 bis 12 Kohlenstoffatomen substituiertes Ammoniumkation;
$R_1$ für Wasserstoff oder einen aliphatischen Alkylrest mit 1 bis 6 Kohlenstoffatomen;
$R_3$, $R_4$ unabhängig voneinander für Wasserstoff, einen aliphatischen Alkylrest, einen Alkoxylrest oder einen Acylaminorest mit je bis zu 3 Kohlenstoffatomen;
X für $NR_5R_6$,
worin
$R_5$, $R_6$ unabhängig voneinander für Wasserstoff, einen Alkylrest mit 1 bis 6 Kohlenstoffatomen, einen substituierten Alkylrest mit 2 bis 6 Kohlenstoffatomen, worin die Substituenten aus der Gruppe bestehend aus OH, $OCH_3$, COOM und $SO_3M$ ausgewählt werden; einen Aralkylrest, einen Arylrest oder einen mit COOM oder $SO_3M$ substituierten Arylrest stehen; oder $R_5$ und $R_6$ einen Ring mit oder ohne Einschluss eines Heteroatoms bilden;
oder
X für $SR_7$,
worin
$R_7$ für einen unsubstituierten Alkylrest mit 1 bis 6 Kohlenstoffatomen, einen substituierten Alkylrest mit 2 bis 6 Kohlenstoffatomen, worin die Substituenten aus der Gruppe bestehend aus OH, $OCH_3$, COOM und $SO_3M$ ausgewählt werden;
oder
X für $OR_8$,
worin
$R_8$ für Wasserstoff oder einen aliphatischen Alkylrest mit 1 bis 6 Kohlenstoffatomen
stehen
und
m den Wert 1, 2 oder 3 annimmt und die $SO_3M$-Substituenten sich in den Positionen 4,8; 5,7; 6, 8; 3, 6, 8; oder 4,6,8 befinden und im Fall, wo m den Wert 1 annimmt, der $SO_3M$-Substituent sich auch in den Positionen 1 oder 4 bis 8 befinden kann,

Farbstoffen der allgemeinen Formel (XI),

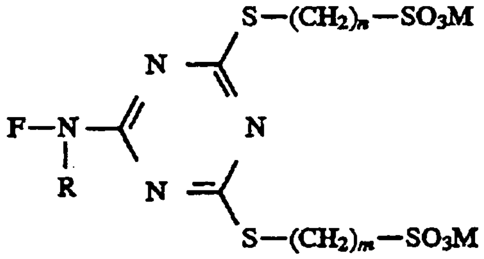

(XI)

worin

F für einen Monoazofarbstoffrest;
R für Wasserstoff oder einen aliphatischen Alkylrest mit 1 bis 6 Kohlenstoffatomen;
M für Wasserstoff, ein einwertiges Metallkation, ein Ammoniumkation oder ein mit einem Alkylrest, einem Alkoxyalkylrest oder einem Hydroxyalkylrest mit je 1 bis 12 Kohlenstoffatomen substituiertes Ammoniumkation steht und
m, n unabhängig voneinander einen Wert zwischen 2 und 6 annehmen,

Säuregelb 17, Säuregelb 23, Direktgelb 132, Direktgelb 86 oder deren Gemischen ausgewählt werden.

**10.** Aufzeichnungsflüssigkeiten für den Tintenstrahldruck, welche neben mindestens einem Bisazofarbstoff oder einer Mischung von Bisazofarbstoffen nach einem oder mehreren der Ansprüche 1 bis 4 enthalten.

**11.** Aufzeichnungsflüssigkeiten für den Tintenstrahldruck gemäss Anspruch 10, welche zusätzlich noch einen oder mehrere andere Gelbfarbstoffe enthalten.

**12.** Aufzeichnungsflüssigkeiten für den Tintenstrahldruck gemäss Anspruch 11, **dadurch gekennzeichnet, dass** die zusätzlichen Gelbfarbstoffe aus der Gruppe bestehend aus Farbstoffen der allgemeinen Formel (X),

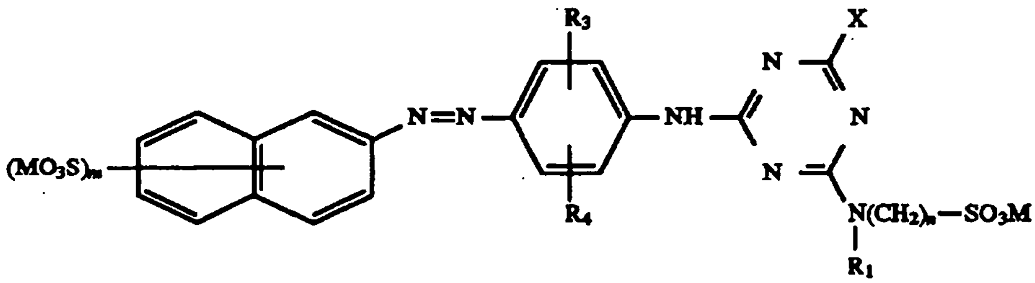

(X)

worin

M für Wasserstoff, ein einwertiges Metallkation, ein Ammoniumkation oder ein mit einem Alkylrest, einem Alkoxyalkylrest oder einem Hydroxyalkylrest mit je 1 bis 12 Kohlenstoffatomen substituiertes Ammoniumkation;
$R_1$ für Wasserstoff oder einen aliphatischen Alkylrest mit 1 bis 6 Kohlenstoffatomen;
$R_3$, $R_4$ unabhängig voneinander für Wasserstoff, einen aliphatischen Alkylrest, einen Alkoxylrest oder einen

Acylaminorest mit je bis zu 3 Kohlenstoffatomen;
X für $NR_5R_6$,
worin
$R_5$, $R_6$ unabhängig voneinander für Wasserstoff, einen Alkylrest mit 1 bis 6 Kohlenstoffatomen, einen substituierten Alkylrest mit 2 bis 6 Kohlenstoffatomen, worin die Substituenten aus der Gruppe bestehend aus OH, $OCH_3$, COOM und $SO_3M$ ausgewählt werden; einen Aralkylrest, einen Arylrest oder einen mit COOM oder $SO_3M$ substituierten Arylrest stehen; oder $R_5$ und $R_6$ einen Ring mit oder ohne Einschluss eines Heteroatoms bilden;
oder
X für $SR_7$,
worin
$R_7$ für einen unsubstituierten Alkylrest mit 1 bis 6 Kohlenstoffatomen, einen substituierten Alkylrest mit 2 bis 6 Kohlenstoffatomen, worin die Substituenten aus der Gruppe bestehend aus OH, $OCH_3$, COOM und $SO_3M$ ausgewählt werden;
oder
X für $OR_8$,
worin
$R_8$ für Wasserstoff oder einen aliphatischen Alkylrest mit 1 bis 6 Kohlenstoffatomen
stehen
und
m den Wert 1, 2 oder 3 annimmt und die $SO_3M$-Substituenten sich in den Positionen 4,8; 5,7; 6, 8; 3, 6, 8; oder 4,6,8 befinden und im Fall, wo m den Wert 1 annimmt, der $SO_3M$-Substituent sich auch in den Positionen 1 oder 4 bis 8 befinden kann,

Farbstoffen der allgemeinen Formel (XI),

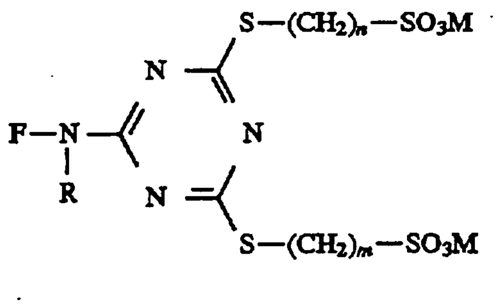

(XI)

worin

F für einen Monoazofarbstoffrest;
R für Wasserstoff oder einen aliphatischen Alkylrest mit 1 bis 6 Kohlenstoffatomen;
M für Wasserstoff, ein einwertiges Metallkation, ein Ammoniumkation oder ein mit einem Alkylrest, einem Alkoxyalkylrest oder einem Hydroxyalkylrest mit je 1 bis 12 Kohlenstoffatomen substituiertes Ammoniumkation steht
und
m, n unabhängig voneinander einen Wert zwischen 2 und 6 annehmen,

Säuregelb 17, Säuregelb 23, Direktgelb 132, Direktgelb 86 oder deren Gemischen ausgewählt werden.

## Claims

1. Bisazo dyes of general formula (V)

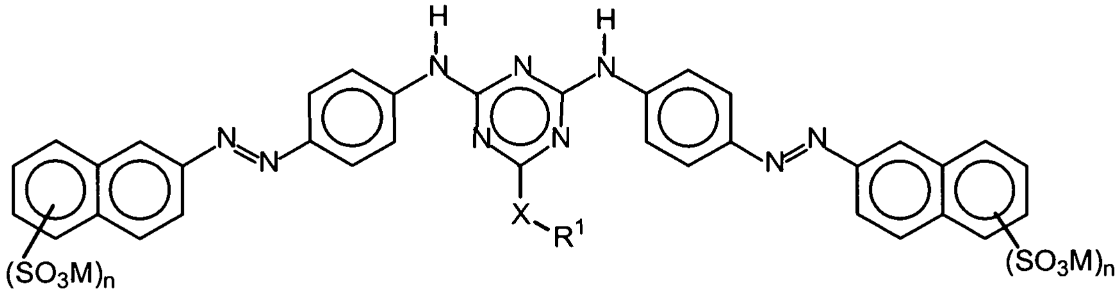

(V)

wherein

X represents a sulphur atom or an imino group optionally substituted by an alky group having from 1 to 8 carbon atoms;
$R^1$ represents a sulphoalkyl group $-(CH_2)_mSO_3M$;
M represents a hydrogen atom, a metal cation or an ammonium cation, which may be substituted by one or more alkyl or substituted alkyl or hydroxyalkoxyalkyl groups each having from 1 to 8 carbon atoms;
m is 2, 3 or 4
and
n is 2 or 3.

2. Bisazo dyes according to claim 1, **characterised by** the fact that

$R^1$ represents a sulphoalkyl group $-(CH_2)_mSO_3M$
and
n is equal to 2.

3. Bisazo dyes according to claim 2, **characterised by** the fact that the substituents $SO_3M$ are in positions 4,8 or 6,8.

4. Bisazo dyes according to anyone of claims 2 or 3, **characterised by** the fact that

M represents a cation of the alkali metals lithium, sodium and potassium or an ammonium cation substituted by an alkyl group or a hydroxy containing alkyl group, each having from 1 to 5 carbon atoms.

5. Method of preparation of the disazo dyes according to claim 1, **characterised by** the fact that two units of the chromophore of general formula (VI),

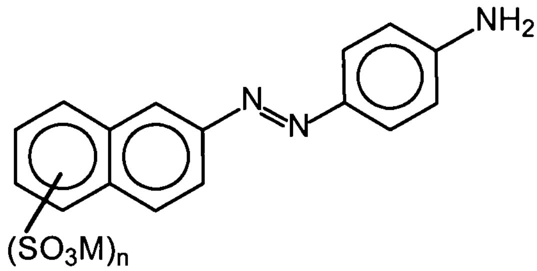

(VI)

wherein M and n are as defined in claim 1,
are condensed with one unit of cyanuric chloride in the presence of a base under formation of the intermediate dye compound of general formula (VII)

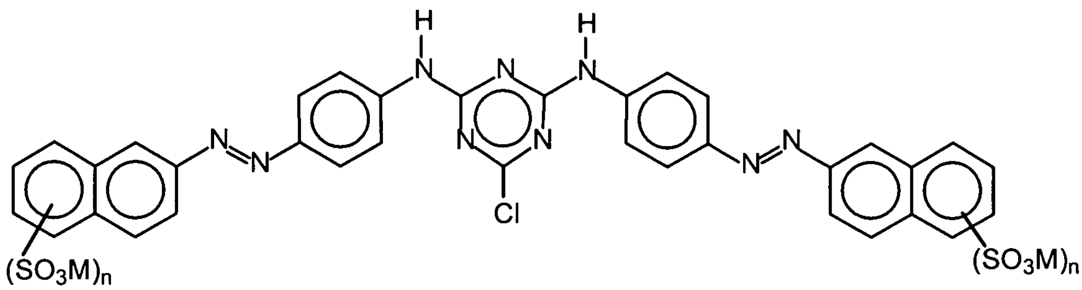

(VII)

and
this intermediate dye compound of general formula (VII) is reacted subsequently with a compound of formula (VIII)

$$HX\text{-}(CH_2)_mSO_3M \qquad (VIII)$$

wherein X, M and m are as defined in claim 1,
under conditions that the dyes of general formula (V) are formed.

**6.** Process for recording text and images on recording sheets and for dying and printing natural or synthetic fibre materials, nanoporous materials, leather and aluminium by applying thereto a disazo dye according to one or more of claims 1 to 4.

**7.** Liquid dye preparations comprising at least one bisazo dye or a mixture of disazo dyes according to one or more of claims 1 to 4.

**8.** Liquid dye preparations according to claim 7, comprising in addition one or more other yellow dyes.

**9.** Liquid dye preparations according to claim 8, **characterised by** the fact that the additional yellow dyes are selected from the group consisting of dyes of general formula (X),

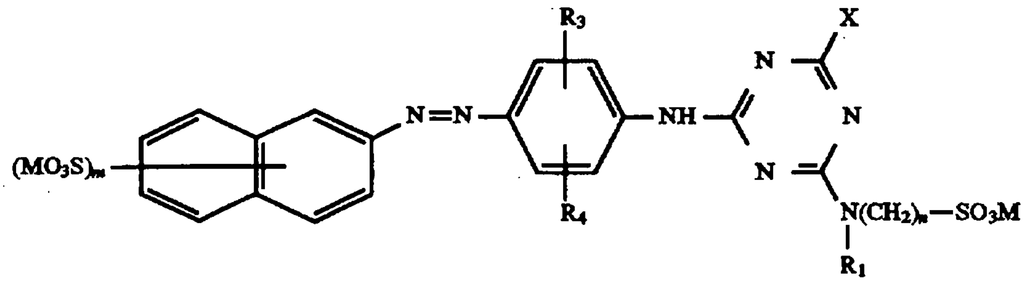

(X)

wherein

M represents a hydrogen atom, a monovalent metal cation, an ammonium cation, which may be substituted by one or more alkyl or hydroxy substituted alkyl or hydroxyalkoxyalkyl groups each having from 1 to 12 carbon atoms;
$R_1$ represents a hydrogen atom or an aliphatic alky group having from 1 to 6 carbon atoms;
$R_3$, $R_4$ independently represent a hydrogen atom, an aliphatic alky group, an alkoxyl group or an acylamino group, each having up to 3 carbon atoms;
X represents $NR_5R_6$,
wherein
$R_5$, $R_6$ independently represent a hydrogen atom, an alky group having from 1 to 6 carbon atoms, a substituted alkyl group having from 2 to 6 carbon atoms, wherein the substituents are selected from the group consisting of OH, $OCH_3$, COOM and $SO_3M$; an aralkyl group, an aryl group or an aryl group substituted by COOM or $SO_3M$; or where $R_5$ and $R_6$ form a ring with or without inclusion of a hetero atom;
or
X represents $SR_7$,
wherein
$R_7$ represents an unsubstituted alkyl group having from 1 to 6 carbon atoms, a substituted alkyl group having from 2 to 6 carbon atoms, wherein the substituents are selected from the group consisting of OH, $OCH_3$, COOM and $SO_3M$;
or
X represents $OR_8$,
wherein
$R_8$ represents a hydrogen atom or an aliphatic alkyl group having from 1 to 6 carbon atoms
and
m is 1, 2 or 3 and the substituents $SO_3M$ are in positions 4,8; 5,7; 6, 8; 3, 6, 8; or 4,6,8, and, in the case where m is equal to 1, the substituent $SO_3M$ may be in positions 1 or 4 to 8;

of general formula (XI),

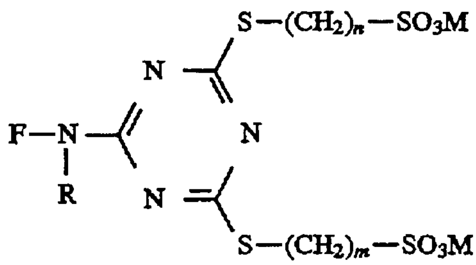

(XI)

wherein

F represents a monoazo dye residue;
R represents a hydrogen atom or an aliphatic alkyl group having from 1 to 6 carbon atoms;
M represents a hydrogen atom, a monovalent metal cation, an ammonium cation, which may be substituted by one or more alkyl or hydroxy substituted alkyl or hydroxyalkoxyalkyl groups each having from 1 to 12 carbon atoms and
m, n independently are from 2 to 6;

Acid Yellow 17, Acid Yellow 23, Direct Yellow 132, Direct Yellow 86 or their mixtures.

**10.** Recording fluid for ink jet printing, comprising at least one bisazo dye or a mixture of bisazo dyes according to one or more of claims 1 to 4.

**11.** Recording fluid for ink jet printing according to claim 10, comprising in addition one or more other yellow dyes.

**12.** Recording fluid for ink jet printing according to claim 11, **characterised by** the fact that the additional yellow dyes are selected from the group consisting of dyes of general formula (X),

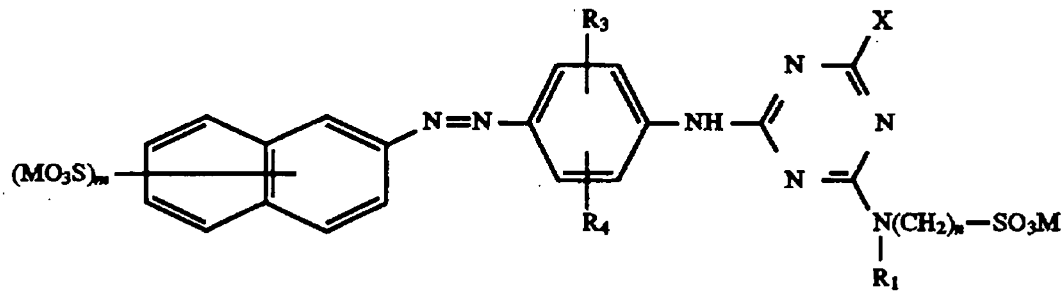

(X)

wherein

M represents a hydrogen atom, a monovalent metal cation, an ammonium cation, which may be substituted by one or more alkyl or hydroxy substituted alkyl or hydroxyalkoxyalkyl groups each having from 1 to 12 carbon atoms;
$R_1$ represents a hydrogen atom or an aliphatic alky group having from 1 to 6 carbon atoms;
$R_3$, $R_4$ independently represent a hydrogen atom, an aliphatic alky group, an alkoxyl group or an acylamino

group, each having up to 3 carbon atoms;
X represents $NR_5R_6$,
wherein
$R_5$, $R_6$ independently represent a hydrogen atom, an alky group having from 1 to 6 carbon atoms, a substituted alkyl group having from 2 to 6 carbon atoms, wherein the substituents are selected from the group consisting of OH, $OCH_3$, COOM and $SO_3M$; an aralkyl group, an aryl group or an aryl group substituted by COOM or $SO_3M$; or where $R_5$ and $R_6$ form a ring with or without inclusion of a hetero atom;
or
X represents $SR_7$,
wherein
$R_7$ represents an unsubstituted alkyl group having from 1 to 6 carbon atoms, a substituted alkyl group having from 2 to 6 carbon atoms, wherein the substituents are selected from the group consisting of OH, $OCH_3$, COOM and $SO_3M$;
or
X represents $OR_8$,
wherein
$R_8$ represents a hydrogen atom or an aliphatic alkyl group having from 1 to 6 carbon atoms
and
m is 1, 2 or 3 and the substituents $SO_3M$ are in positions 4,8; 5,7; 6, 8; 3, 6, 8; or 4,6,8, and, in the case where m is equal to 1, the substituent $SO_3M$ may be in positions 1 or 4 to 8;
of general formula (XI),

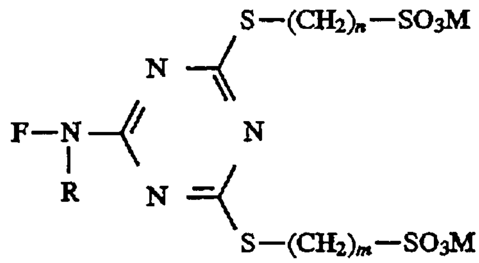

(XI)

wherein

F represents a monoazo dye residue;
R represents a hydrogen atom or an aliphatic alkyl group having from 1 to 6 carbon atoms;
M represents a hydrogen atom, a monovalent metal cation, an ammonium cation, which may be substituted by one or more alkyl or hydroxy substituted alkyl or hydroxyalkoxyalkyl groups each having from 1 to 12 carbon atoms
and
m, n independently are from 2 to 6;

Acid Yellow 17, Acid Yellow 23, Direct Yellow 132, Direct Yellow 86 or their mixtures.

## Revendications

**1.** Colorants bisazoïques de formule générale (V)

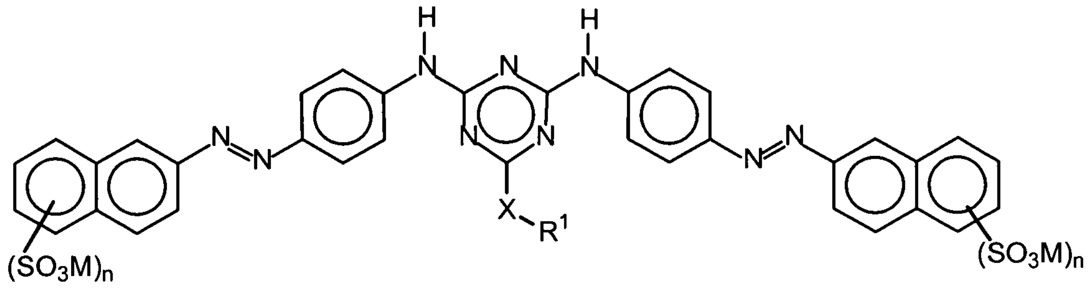

(V)

dans laquelle

X représente un atome de soufre ou un radical imino optionellement substitué par un radical alkyle ayant de 1 à 8 atomes de carbone;
$R^1$ représente un radical sulfoalkyle $-(CH_2)_mSO_3M$;
M représente un atome d'hydrogène, un cation métallique ou un cation ammonium optionnellement substitué par un ou plusieurs radicaux alkyle ou alkyle substitué ou hydroxyalcoxyalkyle ayant chacun de 1 à 8 atomes de carbone;
m vaut 2, 3 ou 4
n vaut 2 ou 3.

**2.** Colorants bisazoïques selon la revendication 1, **caractérisé par le fait que**

n vaut 2.

**3.** Colorants bisazoïques selon la revendication 1, **caractérisé par le fait que** les substituents $SO_3M$ sont fixés en position 4,8 ou 6,8.

**4.** Colorants bisazoïques selon une des revendications 2 ou 3, **caractérisé par le fait que**

M représente le cation d'un des métaux alcalins lithium, sodium ou potassium ou un cation ammonium substitué par un radical alkyle ayant de 1 à 5 atomes de carbone ou par un radical alkyle ayant de 1 à 5 atomes de carbone substitué par un groupe hydroxyle.

**5.** Procédé de préparation des colorants bisazoïques selon la revendication 1, **caractérisé par le fait que** deux unités d'un chromophore de formule générale (VI)

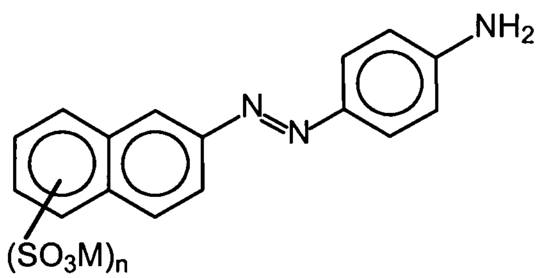

(VI)

dans laquelle M et n sont définis comme à la revendication 1,

sont condensés avec une unité du chlorure de cyanuryle pour donner le colorant intermédiaire de formule (VII)

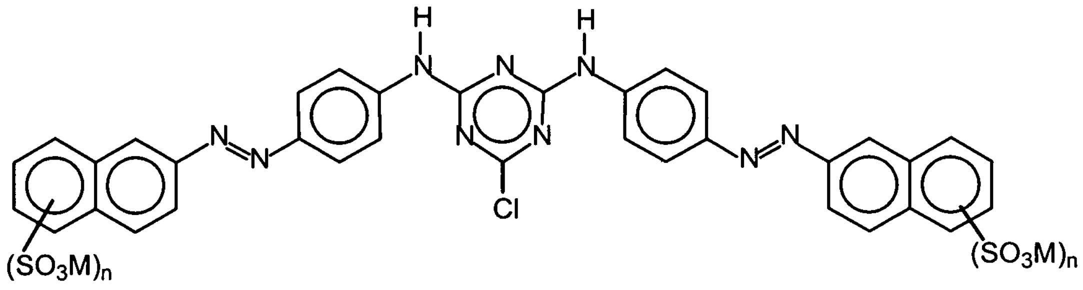

(VII)

et ensuite
que ce colorant intermédiaire est réagi avec un composé de formule (VIII)

$$HX\text{-}(CH_2)_mSO_3M \qquad \text{(VIII)}$$

dans laquelle X, M et m sont définis comme à la revendication 1, conduisant aux colorants bisazoïques de formule générale (V).

6. Utilisation des colorants bisazoïques selon une ou plusieurs des revendications 1 à 4 pour l'enregistrement de caractères ou d'images sur des feuilles d'enregistrement, pour la teinture et l'impression de matériaux fibreux naturels ou synthétiques, de matériaux nanoporeux, du cuir et d'aluminium.

7. Préparations liquides de colorants qui comprennent ou moins un colorant bisazoïque ou un mélange de colorants bisazoïques selon une ou plusieurs des revendications 1 à 4.

8. Préparations liquides de colorants selon la revendication 7 qui comprennent un ou plusieurs colorants jaunes supplémentaires.

9. Préparations liquides de colorants selon la revendication 8, **caractérisé par le fait que**
les colorants jaunes supplémentaires sont choisis parmi le groupe constitué des colorants jaunes de formule générale (X)

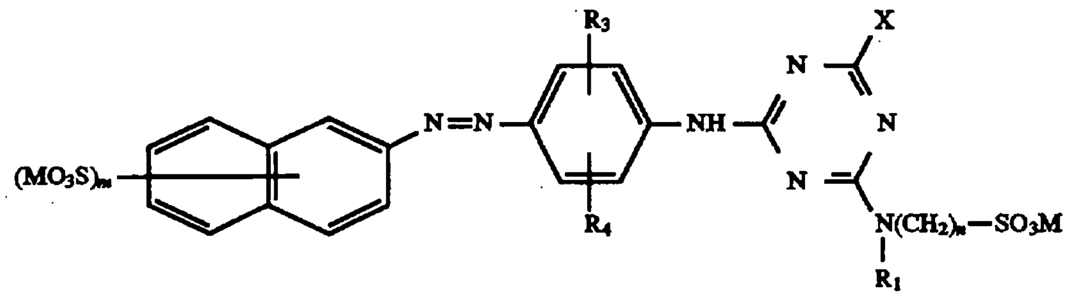

(X)

dans laquelle

M représente un atome d'hydrogène, un cation métallique monovalent, un cation ammonium ou un cation ammonium substitué par un groupe alkyle, alcoxyalkyle ou hydroxyalkyle ayant chacun de 1 à 12 atomes de carbone;
$R_1$ représente un atome d'hydrogène ou un radical alkyle aliphatique ayant de 1 à 6 atomes de carbone;
$R_3$, $R_4$ représentent indépendamment un atome d'hydrogène, un radical alkyle aliphatique, un radical alcoxyle ou un radical acylamino ayant chacun jusqu'à 3 atomes de carbone;
X représente $NR_5R_6$,
où
$R_5$, $R_6$ représentent indépendamment un atome d'hydrogène, un radical alkyle ayant de 1 à 6 atomes de carbone, un radical alkyle substitué ayant de 2 à 6 atomes de carbone, où les substituents sont choisis parmi le groupe constitué du radical OH, du radical $OCH_3$, du radical COOM et du radical $SO_3M$; un radical aralkyle, un radical aryle ou un radical aryle substitué par un groupe COOM ou un groupe $SO_3M$; ou $R_5$ et $R_6$ forment un cycle sans ou avec inclusion d'un hétéroatome;
ou
X représente $SR_7$,
où
$R_7$ représente un radical alkyle non substitué ayant de 1 à 6 atomes de carbone, un radical alkyle substitué ayant de 2 à 6 atomes de carbone, où les substituents sont choisis parmi le groupe constitué du radical OH, du radical $OCH_3$, du radical COOM et du radical $SO_3M$;
ou
X du radical $OR_8$,
où
$R_8$ représente un atome d'hydrogène ou un radical alkyle aliphatique ayant de 1 à 6 atomes
et
m vaut 1, 2 ou 3 et les substituents $SO_3M$ sont fixés en positions 4,8; 5,7; 6, 8; 3, 6, 8; ou 4,6,8 , et, dans le cas, où m vaut 1, le substituent $SO_3M$ est fixé aux positions 1 ou 4 à 8,

colorants de formule générale (XI),

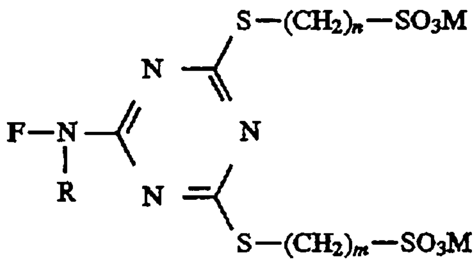

(XI)

dans laquelle

F représente un reste de colorant monoazoïque;
R représente un atome d'hydrogène ou un radical alkyle aliphatique ayant de 1 à 6 atomes;
M représente un atome d'hydrogène, un cation métallique monovalent, un cation ammonium ou un cation ammonium substitué par un groupe alkyle, alcoxyalkyle ou hydroxyalkyle ayant chacun de 1 à 12 atomes de carbone;
et
m, n valent indépendamment de 2 à 6,

le jaune acide 17, le jaune acide 23, le jaune direct 132, le jaune direct 86 ou leurs mélanges.

**10.** Encres d'impression selon la méthode du jet d'encre qui comprennent ou moins un colorant bisazoïque ou un

mélange de colorants bisazoïques selon une ou plusieurs des revendications 1 à 4.

**11.** Encres d'impression selon la méthode du jet d'encre selon la revendication 10 qui comprennent un ou plusieurs colorants jaunes supplémentaires.

**12.** Encres d'impression selon la méthode du jet d'encre selon la revendication 10, **caractérisé par le fait que** les colorants jaunes supplémentaires sont choisis parmi le groupe constitué des colorants jaunes de formule générale (X)

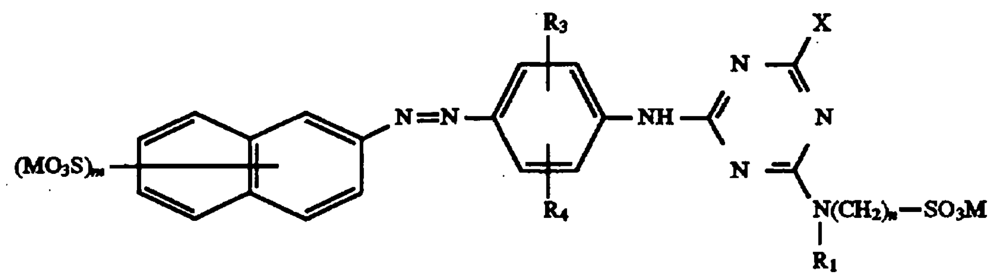

(X)

dans laquelle

M représente un atome d'hydrogène, un cation métallique monovalent, un cation ammonium ou un cation ammonium substitué par un groupe alkyle, alcoxyalkyle ou hydroxyalkyle ayant chacun de 1 à 12 atomes de carbone;
$R_1$ représente un atome d'hydrogène ou un radical alkyle aliphatique ayant de 1 à 6 atomes de carbone;
$R_3$, $R_4$ représentent indépendamment un atome d'hydrogène, un radical alkyle aliphatique, un radical alcoxyle ou un radical acylamino ayant chacun jusqu'à 3 atomes de carbone;
X représente $NR_5R_6$,
où
$R_5$, $R_6$ représentent indépendamment un atome d'hydrogène, un radical alkyle ayant de 1 à 6 atomes de carbone, un radical alkyle substitué ayant de 2 à 6 atomes de carbone, où les substituents sont choisis parmi le groupe constitué du radical OH, du radical $OCH_3$, du radical COOM et du radical $SO_3M$; un radical aralkyle, un radical aryle ou un radical aryle substitué par un groupe COOM ou un groupe $SO_3M$; ou $R_5$ et $R_6$ forment un cycle sans ou avec inclusion d'un hétéroatome;
ou
X représente $SR_7$,
où
$R_7$ représente un radical alkyle non substitué ayant de 1 à 6 atomes de carbone, un radical alkyle substitué ayant de 2 à 6 atomes de carbone, où les substituents sont choisis parmi le groupe constitué du radical OH, du radical $OCH_3$, du radical COOM et du radical $SO_3M$;
ou
X du radical $OR_8$,
où
$R_8$ représente un atome d'hydrogène ou un radical alkyle aliphatique ayant de 1 à 6 atomes
et
m vaut 1, 2 ou 3 et les substituants $SO_3M$ sont fixés en positions 4,8; 5,7; 6, 8; 3, 6, 8; ou 4,6,8 , et, dans le cas, où m vaut 1, le substituent $SO_3M$ est fixé aux positions 1 ou 4 à 8,

colorants de formule générale (XI),

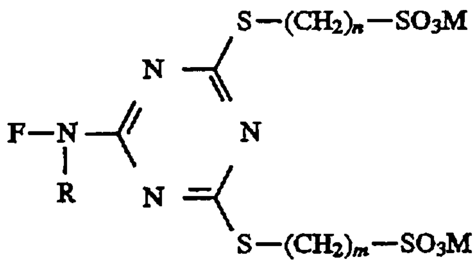

(XI)

dans laquelle

F représente un reste de colorant monoazoïque;
R représente un atome d'hydrogène ou un radical alkyle aliphatique ayant de 1 à 6 atomes;
M représente un atome d'hydrogène, un cation métallique monovalent, un cation ammonium ou un cation ammonium substitué par un groupe alkyle, alcoxyalkyle ou hydroxyalkyle ayant chacun de 1 à 12 atomes de carbone;
et
m, n valent indépendamment de 2 à 6,

le jaune acide 17, le jaune acide 23, le jaune direct 132, le jaune direct 86 ou leurs mélanges.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 6277185 B
- WO 0166651 A
- WO 2006103414 A
- WO 9624635 A
- EP 0755984 A
- US 4626284 A
- US 4703113 A
- US 4963189 A
- GB 2289473 A
- EP 0425150 A
- EP 0597672 A